# FASCICULE DE BREVET EUROPEEN

(11) **EP 2 225 703 B1**
(45) Date de publication et mention de la délivrance du brevet: **24.10.2018**
(21) Numéro de dépôt: 08862675.9
(22) Date de dépôt: 10.12.2008
(51) Int. Cl.: G06K 19/073, G07C 9/00

(54) **PROCEDE POUR AUTORISER UNE COMMUNICATION AVEC UN DISPOSITIF ELECTRONIQUE PORTABLE, TELLE QU'UN ACCES A UNE ZONE MEMOIRE, DISPOSITIF ET SYSTEME ELECTRONIQUES CORRESPONDANTS**
VERFAHREN ZUM AUTORISIEREN EINER KOMMUNIKATION MIT HILFE EINES TRAGBAREN ELEKTRONISCHEN GERÄTS, WIE DEM ZUGANG ZU EINER SPEICHERZONE, SOWIE ENTSPRECHENDES ELEKTRONISCHES GERÄT UND SYSTEM
METHOD OF AUTHORISING COMMUNICATION WITH A PORTABLE ELECTRONIC DEVICE, SUCH AS TO ACCESS A MEMORY ZONE, CORRESPONDING ELECTRONIC DEVICE AND SYSTEM

(30) Priorité: 18.12.2007 EP 07301688
(43) Date de publication de la demande: 08.09.2010
(73) Titulaire: Gemalto SA, 92190 Meudon (FR)
(72) Inventeur: BANCHELIN, Xavier, F-83150 Bandol (FR)
(74) Mandataire: Milharo, Emilien
(86) Numéro de dépôt international: PCT/EP2008/067171
(87) Numéro de publication internationale: WO 2009/077398

(56) Documents cités:
- EP-A- 1 773 018
- WO-A-97/36264
- US-A- 4 720 860
- US-A- 5 060 263
- US-A1- 2006 047 971
- US-B1- 6 477 547

## Description

### Domaine technique de l'invention :

L'invention concerne un procédé pour autoriser une communication avec un dispositif électronique portable, telle qu'un accès à au moins une zone mémoire du dispositif.

L'invention porte également sur un tel dispositif électronique portable comportant au moins une zone mémoire.

L'invention est, en outre, relative à un système électronique comportant au moins un dispositif électronique de communication, notamment de lecture, coopérant avec un tel dispositif électronique portable.

L'invention trouve application au contrôle du fonctionnement d'un dispositif en général, de préférence portable. Le dispositif autorisant ou interdisant un fonctionnement. Le fonctionnement peut être total ou partiel et comprendre en particulier une autorisation en accès mémoire pour lecture ou écriture, une communication du dispositif avec l'extérieur via des moyens de communication, etc.

Par dispositif électronique portable, il faut comprendre tout dispositif comportant des moyens de contrôle et de traitement d'informations et des moyens de mémorisation de données. Ces données peuvent être accessibles depuis l'extérieur notamment en lecture ou communiquées à l'extérieur. De préférence, l'objet portable tient dans la poche, un sac.

Typiquement, un dispositif électronique portable peut se présenter sous la forme d'un objet embarqué portable (ou « token » en langue anglaise), telle qu'une carte à puce, comprenant au moins une unité logique de traitement ou au moins un microprocesseur, au moins une mémoire, et au moins une interface de communication. L'interface de communication est en charge d'une communication avec l'extérieur du dispositif électronique portable.

Le dispositif électronique portable peut coopérer avec un dispositif électronique de communication ou lecture, afin de pouvoir exploiter, au moins en partie, une ou plusieurs applications supportées par le dispositif électronique portable au travers du dispositif électronique de communication ou lecture.

Document WO 97/36264 divulgue un tel système électronique de contrôle d'accès.

### Etat de la technique :

Il est connu, en tant que dispositif électronique portable, un passeport électronique comportant une page de données (dite « data page » en langue anglaise) propres à son porteur. Le passeport est doté d'une puce à module de communication sans contact de type PICC (acronyme pour « Proximity Integrated Circuit Card » en langue anglaise). La puce est intégrée au sein du passeport constituant un document de voyage lisible par une machine (ou MRTD acronyme pour « Machine Readable Travel Document »). La page de données réserve une zone sur laquelle une information propre au porteur est visible. Une telle zone définit une zone lisible par une machine (ou « Machine Readable Zone » en langue anglaise) destinée à être lue soit à l'oeil nu humain, soit par une machine par passage de la zone à information visible devant un lecteur optique. L'information visible est connue de la puce, afin de pouvoir l'utiliser notamment pour autoriser ou interdire l'accès à une zone mémoire de la puce.

Le lecteur optique lit l'information visible. Le lecteur optique transmet l'information lue à un lecteur sans contact, auquel le lecteur optique est relié. Le lecteur sans contact utilise l'information lue en mettant en oeuvre un mécanisme de contrôle d'accès basique (ou « Basic Access Control » ou BAC en langue anglaise) selon des spécifications OACI (acronyme pour « Organisation de l'Aviation Civile Internationale » ou ICAO acronyme pour « International Civil Aviation Organisation » en langue anglaise) pour pouvoir communiquer avec la puce.

Le lecteur sans contact échange ensuite avec la puce, via une liaison de communication sans contact, par exemple de type ISO (acronyme pour « International Standardisation Organisation » en langue anglaise) 14 443. L'échange d'informations permet l'accès à la zone mémoire de la puce.

Cependant, une telle solution connue présente un inconvénient majeur. En effet, l'information visible constituant la seule information à connaître pour accéder à la zone mémoire de la puce, une telle solution souffre d'une entropie faible. En d'autres termes, la quantité d'informations à connaître est faible puisqu'elle se résume à la seule information visible. Le mécanisme de contrôle d'accès basique est alors particulièrement sensible à une attaque dite de type exhaustif, par laquelle il s'agit d'essayer l'ensemble des informations possibles dont certaines peuvent être prédictibles.

Ainsi, une personne mal intentionnée peut accéder, à l'insu de son porteur, à la zone mémoire de la puce, en opérant une simple copie de l'information visible ou en la retrouvant.

### Exposé de l'invention :

L'invention s'affranchit de l'inconvénient majeur précédemment énoncé en fournissant, selon un mode préféré, un procédé pour accéder à au moins une zone mémoire d'un dispositif électronique portable. Toutefois, il peut s'agir d'un procédé pour établir une communication, l'objet portable transmettant des données, la communication étant permise en fonction du traitement de l'information visible effectuée par l'extérieur.

Plus particulièrement, l'invention est un procédé pour autoriser une communication avec un dispositif électronique portable, selon la revendication 1.

Selon l'invention, le procédé comporte une étape de variation de l'information, selon laquelle l'information varie au moins en partie.

Le principe général de l'invention repose donc sur une nouvelle approche où l'information visible présentée à l'extérieur est non pas figée telle que dans la solution de l'art antérieur explicitée supra, mais modifiable. En tant que telle, l'information peut changer, notamment d'une session de présentation à une session de présentation ultérieure ou notamment à l'initiative du porteur du dispositif.

Par conséquent, une telle possibilité de changement de l'information augmente la quantité d'informations à connaître pour accéder à la zone mémoire du dispositif électronique portable.

La nature de l'information n'est pas limitée, il suffit qu'elle soit visible à l'extérieur. Ainsi, il peut, par exemple, s'agir d'un pictogramme, d'un signe, d'une image, d'un ou plusieurs caractères alphanumériques, d'un code-barre en deux ou trois dimensions, d'un motif lisible par laser, et/ou de toute combinaison de tels éléments ou d'autre(s).

On comprend qu'il résulte d'une telle augmentation de la quantité d'informations une amélioration de l'entropie par rapport à celle inhérente à la solution connue décrite plus haut. L'amélioration de l'entropie provoque une diminution de la probabilité de vol de l'information visible utilisée pour accéder à la zone mémoire du dispositif électronique portable.

Quant à la lecture optique de l'information visible, elle est effectuée soit par un oeil humain soit par un appareil à lecture optique.

Il convient de noter que par l'expression « information visible », il faut entendre qu'il s'agit d'une information perceptible notamment par un lecteur optique.

Ainsi, l'information visible peut se lire selon une présentation extérieure quelconque. On peut notamment citer une présentation de l'information visible sur un même plan ou sur plusieurs plans, pour une information en relief.

Du fait de la variabilité de l'information, l'accès à la zone mémoire du dispositif électronique portable est rendu plus complexe.

Selon un autre aspect, l'invention est un dispositif électronique portable incluant une zone mémoire.

Plus particulièrement, le dispositif électronique portable comporte, en outre, des moyens pour présenter une information visible à l'extérieur et des moyens de communication avec l'extérieur. En outre, le dispositif électronique portable comprend des moyens de prise en compte, au moins en partie, de l'information visible pour autoriser ou interdire un accès, depuis l'extérieur du dispositif électronique portable, à la zone mémoire.

Selon l'invention, le dispositif électronique portable comprend des moyens de variation de l'information qui font varier, au moins en partie, l'information.

En tant que dispositif électronique portable, il constitue un objet embarqué portable (ou « token » en langue anglaise) qui peut revêtir diverses formes. Il peut, par exemple, s'agir d'une clef de type USB (acronyme pour « Universal Serial Bus » en langue anglaise), d'un dongle (ne nécessitant pas de lecteur spécifique pour communiquer avec un ordinateur personnel (ou PC acronyme pour « Personal Computer » en langue anglaise) ou d'une carte SIM (acronyme pour « Subscriber Identity Module » en langue anglaise) munie d'au moins une interface de communication, telle que, par exemple, une interface de communication sans contact de type ISO 14 443.

L'invention porte, enfin, sur un système électronique comprenant un dispositif électronique de communication ou lecture coopérant avec le dispositif électronique portable tel que précité.
Plus précisément, l'invention est un système pour autoriser une communication telle qu'un accès à au moins une zone mémoire d'un dispositif électronique portable; Le dispositif électronique portable comprend des moyens pour présenter une information visible à l'extérieur, des moyens de communication avec l'extérieur du dispositif électronique portable, et des moyens de prise en compte, au moins en partie, de l'information pour autoriser ou interdire la communication, telle qu'un accès à ladite au moins une zone mémoire; Le système comprenant le dispositif électronique portable et un dispositif électronique de communication ou de lecture permettant notamment l'accès à ladite au moins une zone mémoire,

Selon l'invention, le dispositif électronique portable comporte des moyens de variation de l'information, les moyens de variation faisant varier au moins en partie l'information, dite information variable. En outre, le dispositif électronique de communication ou de lecture est adapté pour lire ou récupérer l'information variable et communiquer au dispositif électronique portable une information basée au moins en partie sur l'information variable.

Il est à noter que l'information visible et variable est présentée à l'extérieur soit par le dispositif électronique portable soit par tout autre dispositif électronique coopérant avec le dispositif électronique portable, tel qu'un dispositif hôte. Le dispositif hôte est relié au dispositif électronique portable. En tant que dispositif hôte, il peut s'agir d'un téléphone mobile, d'un assistant numérique personnel (ou PDA acronyme pour « Personal Digital Assistant » en langue anglaise), ou d'un PC. Le dispositif hôte peut, en outre, lui-même, être connecté à un réseau de communication, par exemple de type télécommunication mobile, et/ou de type filaire, tel que Internet.

En tant que dispositif électronique de lecture, il peut, par exemple, s'agir d'un PC muni de moyens de reconnaissance optique de caractères (ou OCR acronyme pour « Optical Character Récognition » en langue anglaise) et d'au moins une interface de communication à contact et/ou sans contact (de type radiofréquence ou infra rouge).

En tant que dispositif électronique portable, il peut, par exemple, s'agir d'un « dongle » muni d'une interface de communication à contact par exemple de type USB, SD (acronyme pour « Secure Digital » en langue anglaise) ou MMC (acronyme pour « Multi-Media Card » en langue anglaise) et d'une interface de communication sans contact (de type radiofréquence, par exemple de type Bluetooth, ou infra rouge).

### Description des dessins :

D'autres caractéristiques et avantages de l'invention apparaîtront à la lecture de la description d'un unique mode de réalisation préférentiel de l'invention, donné à titre de simple exemple indicatif non limitatif et des dessins annexés, dans lesquels :
- la figure 1 présente un système, selon l'invention, comprenant un passeport électronique ou à puce, en tant que dispositif électronique portable, qui interagit avec un dispositif électronique de lecture ;
- la figure 2 illustre un schéma détaillé de la puce du passeport électronique du système de la figure 1 ;
- la figure 3 présente un organigramme simplifié d'un exemple d'un procédé mis en oeuvre par le système de la figure 1 pour accéder à une zone mémoire de la puce du passeport électronique.

### Description d'un mode de réalisation :

Le mode de réalisation explicité en relation avec les figures annexées n'a pas pour objet de réduire la portée de l'invention, il peut donc y être apporté de nombreuses modifications sans sortir pour autant du cadre de celle-ci.

On notera, en particulier, que le dispositif électronique portable de l'invention peut revêtir différentes formes.

Il peut s'agir notamment d'un dispositif électronique portable autonome ou non autonome.

Dans le présent document de brevet, le dispositif électronique portable est autonome, c'est-à-dire qu'il n'a pas, outre le dispositif de lecture, besoin d'un autre dispositif électronique pour fonctionner.

On cite, en tant que dispositif électronique portable autonome, notamment une carte à puce pour paiement électronique, une carte à puce pour validation d'un titre de transport, une carte à puce pour identification d'un objet ou d'une personne.

En tant que dispositif électrique portable non autonome, c'est-à-dire qu'il a besoin, outre le dispositif de lecture, d'un autre dispositif électronique, tel un dispositif hôte, on décrit ci-dessous un exemple d'un système regroupant un module d'identification d'abonné munie d'une interface sans contact.

De façon connue en soi, un système comprend une carte SIM (acronyme pour « Subscriber Identity Module » en langue anglaise) munie d'une interface de type à communication en champ proche NFC (acronyme pour « Near Field Communication » en langue anglaise) coopérant avec un téléphone mobile. La carte dite SIM-NFC supporte au moins deux applications. La carte dispose d'une première interface à contact de type ISO 7816 pour mettre en oeuvre une application d'identification d'abonné, et d'une deuxième interface sans contact de type NFC pour mettre en oeuvre une application de paiement électronique, une application de paiement et/ou validation d'un titre de transport, et/ou de contrôle d'accès.

Selon un premier mode de réalisation particulier, l'invention est mise en oeuvre par un système incluant la carte SIM-NFC, en tant que dispositif électronique portable, qui coopère avec le téléphone mobile, en tant que dispositif hôte, et un lecteur sans-contact, en tant que dispositif électronique de lecture. La carte SIM-NFC présente, en utilisant notamment l'écran du téléphone mobile, une information variable. L'information variable est lue, à l'oeil nu, par une personne. La personne transmet l'information variable affichée au lecteur sans contact, en l'entrant, par exemple à l'aide d'un clavier équipant le lecteur sans contact. Le lecteur sans contact traite l'information variable reçue et soumet, par une communication radiofréquence, une information fonction de l'information variable affichée à la carte multi-application SIM-NFC.

Selon un deuxième mode de réalisation, l'invention est mise en oeuvre par un système comportant la carte SIM-NFC, en tant que dispositif électronique portable, qui coopère avec le téléphone mobile, en tant que dispositif hôte, et un lecteur sans-contact doté de moyens de reconnaissance optiques, en tant que dispositif électronique de lecture. La carte multi-application SIM-NFC présente, en utilisant notamment l'écran du téléphone mobile, une information variable à proximité du lecteur sans contact, effectuant en outre une fonction de lecture optique, afin de lire toute ou partie de l'information variable. Le lecteur optique et sans-contact lit l'information variable affichée, la traite et soumet, par une communication radiofréquence, une information fonction de l'information variable affichée à la carte SIM-NFC.

Le premier mode, faisant intervenir une personne, et le deuxième mode de réalisation du système, lui entièrement automatique, permettent de sécuriser, du fait de la présentation d'une information variable à l'écran du téléphone, une transaction du mode « sans-contact » désirée par un utilisateur de l'équipement téléphone mobile-carte SIM-NFC.

Il est clair que l'invention n'impose aucune contrainte quant à l'application mise en jeu au sein du dispositif électronique portable. Il peut s'agir d'au moins une application appartenant au groupe suivant :
- une application d'identification du porteur,
- une application d'authentification d'un interlocuteur externe ;
- une application de fidélisation d'un porteur ;
- une application de contrôle d'accès à une zone d'accès restreint ou à un service de transport ;
- une application de paiement électronique ;
- une application d'identification d'abonné.

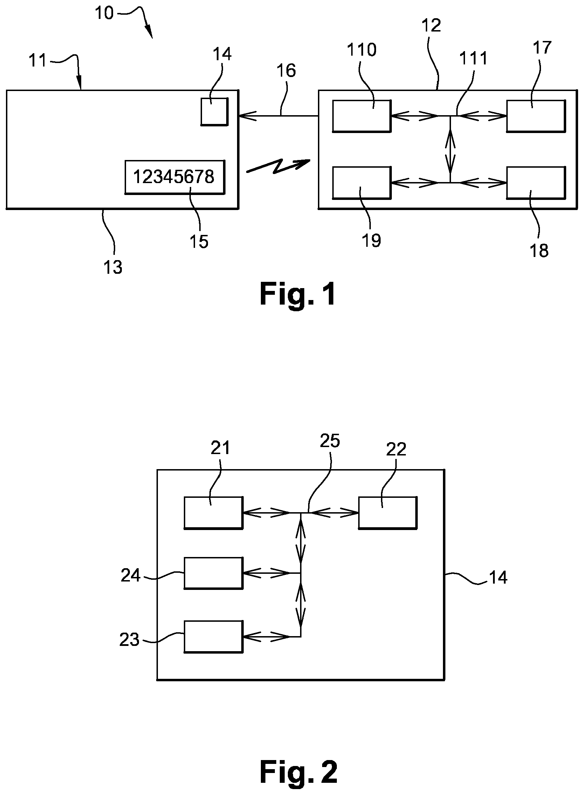

Comme présenté à titre d'exemple sur la figure 1, un système 10 électronique comprend un document d'identification d'un objet ou d'une personne, tel qu'un passeport 11 électronique, en tant que dispositif électronique portable, et un dispositif 12 électronique de lecture.

Il convient de noter que le passeport 11 n'est qu'une forme particulière d'un document, auquel peut s'appliquer l'invention.

L'invention peut s'appliquer à tout autre document d'identification d'un objet ou d'une personne, dont le document dit MRTD.

On peut notamment citer une liste d'éléments à puce, auquel l'invention peut s'appliquer, tels que :
- un permis de conduire ;
- une carte d'identité ;
- une carte grise ;
- une carte d'immigration ;
- une carte de séjour ;
- un titre de séjour ;
- une carte d'immigration ;
- une carte de vie quotidienne ;
- un visa ;

Bien entendu, une telle liste n'est pas exhaustive.

Le passeport 11 électronique, de façon connue en soi, comporte une page de données, (appelée « data page » en langue anglaise), constituée d'un support 13 doté d'un circuit 14 intégré ou puce électronique.

Selon une alternative de réalisation, la puce 14 est intégrée au sein d'une page du passeport 11 autre que celle de page de données, telle que, par exemple, celle de la couverture du passeport 11.

La puce 14 (détaillée en relation avec la figure 2) comporte une antenne pour communiquer, par ondes radiofréquences, avec l'extérieur. Typiquement, la puce 14 est une puce dite sans contact de type PICC.

Deux lignes d'informations figurent en bas sur le support 13. Les lignes d'information sont prévues visibles depuis l'extérieur du support 13. Une partie des informations visibles est fixe. La partie fixe des informations visibles est figée lors d'une impression de la page 13 en cours de fabrication, lors de sa phase de personnalisation avant sa livraison à son porteur. La partie fixe inclut des informations propres à l'identité du possesseur du passeport, telles que le nom, le prénom, la date et le lieu de naissance, et des informations propres au passeport, telles que son numéro de série et sa date d'expiration.

Une personne, qui possède le passeport 11, est supposée être son porteur.

Selon un mode de réalisation de l'invention, le passeport 11 électronique comporte des moyens pour faire varier, en toute ou partie, l'information présentée sur le support 13 visible depuis l'extérieur.

Pour ce faire, le support 13 inclut un bouton poussoir (non représenté), en tant que moyens de déclenchement de génération d'une information à présenter en tout ou partie à l'extérieur. Ainsi, le porteur du passeport 11 active, en appuyant sur le bouton poussoir, la génération d'une information présentée, par exemple, sous la forme de caractères.

Selon une variante, les moyens de déclenchement de génération d'une information sont constitués d'une touche ou d'une combinaison de touches accessibles par le porteur du passeport 11. Par exemple, il peut s'agir d'une touche ou de plusieurs touches d'un clavier relié par l'intermédiaire d'une interface à contact ménagée au sein du lecteur 12 optique, suite à l'introduction de la page dotée de la puce 14 dans une fente du lecteur 12 optique prévue à cet effet.

Selon un autre mode de réalisation, la puce 14 détecte la seule présence d'ondes électromagnétiques, sonores, ou d'un ou plusieurs rayons lumineux, ou encore d'un champ électrique dans son environnement proche, pour déclencher la génération d'une information variable.

Toute ou partie de l'information visible, avec au moins en partie, une partie variable comporte au moins une zone lisible par une machine dite MRZ.

Pour ce faire, le support 13 inclut un écran 15 à cristaux liquides ou écran LCD (acronyme pour « Liquid Crystal Display » en langue anglaise) prévu sur une zone prédéfinie, pour présenter tout ou partie des informations visibles. Par exemple, l'écran 15 LCD est placé à l'extrémité droite de la première des deux lignes d'informations présentes et affiche huit caractères « 12345678 ».

De la sorte, l'information incluant une partie fixe et une partie variable est présentée à l'extérieur du support 13 dans le présent mode de réalisation. L'information peut être modifiée. Sur une simple action volontaire du porteur du passeport 11, l'information visible est changée.

Selon un autre mode de réalisation, la puce est adaptée pour présenter, tout ou partie des informations visibles, au travers d'un écran déporté, inclus sur un autre dispositif électronique avec lequel le dispositif électronique portable peut coopérer, via une autre interface de communication, par exemple à contact (physique).

Les informations visibles en particulier depuis le lecteur 12 optique, en tant que dispositif électronique de lecture, peuvent changer de manière dynamique. L'ensemble, ou, selon une variante de réalisation, une partie seulement des informations présentées à l'écran 15 LCD sont nécessaires pour lancer une application d'authentification supportée par la puce 14.

L'application d'authentification lancée est alors exécutée par la puce 14, et aboutit avec succès à son terme, lorsque les informations fournies par la puce 14, d'une part, à l'écran 15 LCD, et, d'autre part, à la puce 14, via un canal 16 externe de communication radiofréquence, concordent.

Toute ou partie de l'information visible, incluant toute ou partie de l'information variable, est utilisée par la puce 14, par exemple, pour authentifier un interlocuteur externe.

L'information visible depuis le dispositif 12 électronique de lecture peut changer de manière dynamique.

Une telle variabilité de l'information visible accroît le nombre de possibilités de combinaisons offertes des informations présentables.

Un usurpateur potentiel se voit contraint, pour trouver la bonne information utilisée pour l'accès, depuis l'extérieur, à la puce 14, d'essayer un plus grand nombre de combinaisons de données par rapport à une information constituée uniquement de données fixes.

De cette manière, le risque d'usurpation de l'information variable est moins élevé par rapport au risque d'usurpation de la seule information fixe relatif à la solution connue explicitée plus haut.

Le dispositif 12 électronique de lecture, incluant un dispositif de reconnaissance de caractères optique ou OCR, est adapté et destiné à interagir avec le passeport 11.

Le lecteur 12 optique, en tant qu'interlocuteur externe, comporte un microprocesseur 17, des mémoires de différents types, symbolisées par un unique module 18 à mémoire, un dispositif 19 de reconnaissance optique ou OCR, et une antenne 110, en tant qu'interface de communication avec l'extérieur.

Il convient de noter que le dispositif 12 électronique de lecture peut être prévu au sein d'un seul boîtier ou au sein de deux boîtiers distincts. Dans ce dernier cas, le dispositif 19 OCR se trouve dans un premier boîtier, et le lecteur sans contact au sein d'un second boîtier relié au premier boîtier pour récupérer l'information lue par le dispositif OCR.

Typiquement, le lecteur 12 optique est un lecteur de type PCD (acronyme pour « Proximity Coupling Device » en langue anglaise) auquel on ajoute un OCR interne.

Le microprocesseur 17 contrôle et traite des données, en tant qu'organe central du lecteur 12 optique. Le microprocesseur 17 est relié au travers d'un bus 111 de données à chaque élément composant le lecteur 12 optique. Le microprocesseur 17 contrôle les échanges des données pour la communication interne et externe au lecteur 12 optique.

Le module 18 à mémoire mémorise une ou plusieurs applications à exécuter par le microprocesseur 17, dont une application d'authentification d'un interlocuteur externe.

Lors de la présentation du passeport 11 à proximité du lecteur 12, l'OCR 19 est apte à lire l'ensemble des deux lignes d'informations visibles sur le support 13, y compris les huit caractères affichés « 12345678 », ou seulement une partie, à l'écran 15 LCD.

Le lecteur 12 optique fait une acquisition optique, en particulier, de toute ou partie des huit caractères de l'information variable par scannage optique. Le lecteur 12 optique sélectionne, tout ou partie des huit caractères. L'acquisition optique de tout ou partie des huit caractères de l'information variable est nécessaire pour l'accès à au moins une application supportée par le passeport 11 électronique. Le lecteur 12 stocke les caractères sélectionnés au sein du module 18 à mémoire.

Le microprocesseur 17 exécute une application utilisant au moins en partie des huit caractères de l'information variable. Le microprocesseur 17 applique une fonction prédéterminée F aux caractères sélectionnés mémorisés. Le microprocesseur 17 obtient, comme résultat, une information basée sur l'information variable. Le microprocesseur 17 stocke le résultat de l'application basée sur l'information variable acquise de manière optique.

Le lecteur 12 optique transmet, par ondes radiofréquences, au passeport 11 un message avec, comme données, notamment le résultat de l'application basée sur l'information variable acquise de manière optique.

Optionnellement, le lecteur 12 optique utilise le résultat pour encrypter des données à transmettre au passeport 11 pour accéder, par exemple, aux données relatives à son porteur stockées en mémoire.

Le passeport 11 et le lecteur 12 optique utilisent au moins une partie des informations variables pour un mécanisme de contrôle d'accès, par exemple, le BAC modifié et adapté en conséquence.

On rappelle que le mécanisme de contrôle d'accès BAC connu permet, à partir des informations visibles, telles que le numéro du passeport, la date de naissance, et la date d'expiration, au lecteur et au passeport, en tant que MRTD, de calculer des clefs de chiffrement et déchiffrement, pour accéder à des données stockées dans la puce.

Grâce à l'invention, le mécanisme de contrôle d'accès BAC est modifié pour tenir également compte de toute ou partie l'information variable affichée sur l'écran 15 LCD.

La figure 2 montre, de manière détaillée, la puce 14 de la page de données du passeport 11.La puce 14 comprend un microprocesseur 21, une antenne 22, en tant qu'interface de communication avec l'extérieur, une ou des mémoires de différents types représentées par un seul module 23 à mémoire, et des moyens d'alimentation 24 internes, reliés ensemble via un bus 25 de données.

Le microprocesseur 21 ou un microcontrôleur contrôle et traite les données de la puce 14. Le microprocesseur 21 constitue l'unité centrale de la puce 14 de commande des éléments de la puce 14.

Selon une variante de réalisation, une unité logique contrôle et traite des données de la puce, et se substitue à un microprocesseur ou un microcontrôleur.

Avantageusement, la puce 14 fournit l'information variable à afficher à l'écran 15 LCD. Pour ce faire, le microprocesseur 21 exécute une application de génération de l'information variable, par exemple à l'aide d'une fonction de génération d'un nombre aléatoire prédéterminée G, ou d'une lecture séquentielle ou non d'un tableau de données variables prévu à cet effet.

Selon une variante, l'information variable est fournie par une entité externe au passeport 11, en tant que dispositif électronique portable. L'entité externe chargée de fournir l'information variable à afficher est, par exemple, reliée au travers d'une interface à contact au dispositif électronique portable. L'entité externe est en contact physique au niveau de leurs interfaces correspondantes respectives avec le dispositif électronique portable.

Le module 23 à mémoire stocke une ou plusieurs applications, dont l'application d'authentification d'un interlocuteur externe au dispositif électronique portable. Le module 23 mémorise une application basée sur la fonction prédéterminée F partagée avec le lecteur 12. De plus, le module 23 mémorise toute ou partie de l'information variable à afficher à l'écran 15 LCD. En outre, le module 23 stocke des informations propres à des caractéristiques biométriques, telles qu'une photo du visage, d'une empreinte d'un ou plusieurs doigts, et/ou de l'iris d'un oeil ou d'yeux du porteur concerné.

Le microprocesseur 21 décide d'autoriser ou d'interdire l'accès à son module 23 mémoire, depuis l'extérieur du passeport 11. La décision est prise à partir d'une comparaison d'une information reçue de l'extérieur, par le canal 16 radiofréquence, et d'une information de comparaison. L'information de comparaison est basée sur toute ou partie de l'information variable affichée sur l'écran 15 LCD.

Pour prendre la décision, le microprocesseur 21 applique la fonction F à toute ou partie de l'information variable, afin de déterminer l'information de comparaison. La fonction F appliquée à tout ou partie des huit caractères de part et d'autre, à savoir par le passeport 11 et par le lecteur 12 optique, sont identiques.

La puce 14 est apte à détecter la présence d'un champ électromagnétique émis par un lecteur sans contact.

L'antenne 22 reçoit un message accompagné de données dont au moins certaines doivent correspondre à l'application de la fonction F à tout ou partie des huit caractères de l'information variable.

Le microprocesseur 21 récupère et traite le message accompagné de données. Le microprocesseur 21 extrait les données, sélectionne celles relatives à l'information à comparer avec l'information de comparaison. Si les informations comparées concordent, alors le microprocesseur 21 donne accès à des données stockées dans le module 23 mémoire. De telles données sont relatives à une application sollicitée, et/ou à des informations propres à des données biométriques relatives à son porteur.

Les moyens 24 d'alimentation interne sont constitués d'une pile. La pile 24 alimente l'ensemble des composants du passeport 11 électronique pour son fonctionnement.

De manière avantageuse, la pile 24 est, au moins en partie, rechargeable. Pour recharger la pile 24, la puce 24 est équipée de capteurs d'énergie depuis un champ électromagnétique externe généré par le lecteur 12 optique, de capteurs d'énergie solaire, et/ou de capteurs d'énergie lumineux.

Selon une variante de réalisation, aucun moyen d'alimentation interne n'est prévu au sein du passeport 11. Selon une telle variante de réalisation, l'énergie est récupérée depuis un champ électromagnétique externe.

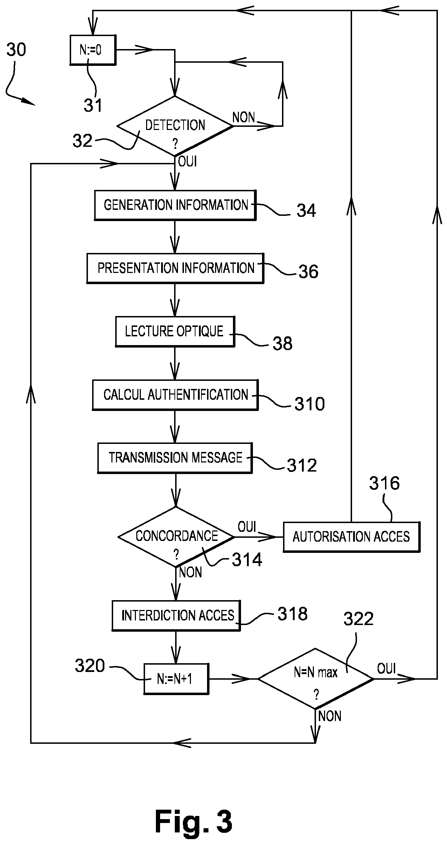

La figure 3 montre un organigramme d'un mode de réalisation particulier du procédé 30 selon l'invention mis en oeuvre pour accéder à une zone mémoire du passeport 11.

Tout d'abord, la puce 14 du passeport 11 initialise 31 un compteur de ratifications, en lui affectant la valeur nulle.

Puis, lors d'une étape 32 de test, la puce 14 teste 32 si un appui sur le bouton poussoir s'est produit. Tant qu'aucun appui n'est détecté par la puce 14, on boucle à l'étape 32 de test.

Selon une variante, il s'agit d'une détection de la présence d'un champ électromagnétique lors d'une introduction du passeport 11 au sein du champ électromagnétique généré par le lecteur 12 pourvu d'une antenne rayonnante.

Dès que la puce 14 a détecté un appui sur le bouton poussoir, la puce 14 génère 34 une information variable.

Une fois générée, toute ou partie de l'information variable est présentée 36 à l'extérieur du passeport 11, au travers de l'écran 15 LCD.

Lors d'un passage suffisamment proche de l'OCR 19, l'OCR 19 lit toute ou partie de l'information visible incluant tout ou partie de l'information variable affichée à l'écran 15 LCD.

De manière optionnelle, l'information variable est présentée à l'extérieur pendant une durée de temporisation prédéfinie laissant au lecteur optique d'acquérir l'information variable, par exemple 3 secondes.

Selon une alternative, une action du porteur, tel qu'un appui sur un bouton poussoir, bloque l'alimentation de l'écran 15 LCD, pour invalider l'information variable affichée.

La puce 14 détermine 310, de son côté, une première valeur d'authentification en appliquant une fonction F ou algorithme prédéterminé, en utilisant en entrée notamment tout ou partie de l'information variable lue.

De même, le lecteur 12 optique détermine 310 une deuxième valeur d'authentification en appliquant une même fonction ou algorithme prédéterminé, en utilisant également en entrée notamment toute ou partie de l'information variable lue.

Le lecteur 12 optique transmet 312 au passeport 11 un message accompagné de la deuxième valeur d'authentification.

Une fois le message reçu, la puce 14 compare 314 les première et deuxième valeurs d'authentification pour décider s'il existe une concordance.

Dans l'affirmative, c'est-à-dire si les première et deuxième valeurs d'authentification concordent, la puce 14 autorise 316 l'accès à une zone mémoire du module 23 à mémoire, par exemple les données biométriques propres à son porteur. Puis, suite à un succès à une comparaison entre les deux valeurs d'authentification générées par chacune des deux parties impliquées, on boucle à l'étape 31 d'initialisation de la valeur du compteur à zéro.

Dans la négative, à savoir lorsque les première et deuxième valeurs d'authentification ne concordent pas, alors la puce 14 interdit 318 tout accès à une zone mémoire du module 23 à mémoire.

A la suite d'un échec à une comparaison entre les deux valeurs d'authentification, on incrémente 320, la valeur d'un compteur de ratification.

Puis, la puce 14 teste 322 si le compteur de ratification a atteint une valeur de ratifications prédéterminée maximale, par exemple 10.

Tant que la valeur du compteur de ratifications est strictement inférieure à la valeur de ratifications maximale, alors on boucle à l'étape 34 de génération d'une nouvelle information variable destinée à être lue, au moins en partie.

Sinon, dès que le compteur de ratification a atteint la valeur de ratifications maximale, alors on boucle à l'étape 31 d'initialisation de la valeur du compteur à zéro.

Bien que l'invention ait été décrite principalement par rapport à un accès mémoire, elle est applicable au contrôle du fonctionnement d'un dispositif en général, de préférence portable. Le dispositif autorisant ou interdisant un fonctionnement selon le résultat d'un test comprenant une lecture de proximité d'une information variable connue du dispositif puis transformation à l'aide d'un algorithme ou méthode partagée de préférence cryptographique et comparaison dans le dispositif du résultat retourné pour autoriser son fonctionnement ou coopération. Le fonctionnement peut être total ou partiel et comprendre en particulier une autorisation en accès mémoire pour lecture ou écriture, une communication du dispositif avec l'extérieur via des moyens de communication, etc.

## Revendications

1. Procédé (30) pour autoriser une communication entre un dispositif (11) électronique portable et un dispositif de communication externe (12), le dispositif électronique portable comprenant des moyens (14, 15) pour présenter une première information visible à l'extérieur et des moyens (22) de communication, l'information étant, au moins en partie, prise en compte par le dispositif électronique portable pour autoriser la communication avec le dispositif (12) de communication externe, le procédé comportant une étape (38) de lecture optique de l'information par le dispositif de communication externe, le dispositif de communication externe (12) fournissant au dispositif électronique portable une seconde information basée au moins en partie sur ladite première information et le dispositif électronique portable effectuant une étape de comparaison (314) par rapport à ladite seconde information pour autoriser ladite communication, **caractérisé en ce que** le procédé comporte une étape (34) de variation faisant varier ladite première information par le dispositif portable, ladite première information étant une information variable.

2. Procédé selon la revendication 1, **caractérisé en ce que** l'information variable est fournie en réponse à une réception depuis l'extérieur, par le dispositif électronique portable, d'au moins une information représentative d'un succès à la comparaison relatif à une précédente lecture d'une information variable.

3. Procédé selon la revendication 2, la fourniture d'une information variable comprend une réception depuis l'extérieur, par le dispositif électronique portable, d'un nombre prédéterminé de ratifications relatif à une précédente lecture d'une information variable.

4. Procédé selon l'une des revendications 1 à 3, dans lequel l'étape de lecture optique permet l'accès à au moins une application supportée par le dispositif électronique portable.

5. Procédé selon la revendication 4, dans lequel l'application est comprise au sein de la liste suivante :
- une application d'identification d'un porteur ;
- une application d'authentification d'un interlocuteur du dispositif électronique portable ;
- une application de fidélisation d'un porteur ;
- une application de contrôle d'accès à une zone d'accès restreint ou à un service de transport ;
- une application de paiement électronique ; et/ou
- une application d'identification d'abonné.

6. Application du procédé selon l'une des revendications 1 à 5 pour une identification du porteur du dispositif électronique portable, dans lequel le procédé comprend les étapes suivantes :
- lecture optique, par un dispositif électronique de lecture, de l'information variable ;
- détermination, par le dispositif électronique de lecture, d'une première valeur d'authentification selon un algorithme d'authentification prédéterminé et de l'information variable ;
- réception par le dispositif électronique portable, par un lien radiofréquence depuis le dispositif électronique de lecture, de la première valeur d'authentification ;
- comparaison, par le dispositif électronique portable, de la première valeur d'authentification à une seconde valeur d'authentification, la seconde valeur d'authentification étant fonction de l'information variable ;
- dans l'hypothèse où les première et seconde valeurs d'authentification correspondent, autorisation d'accès, par le dispositif électronique portable, à ladite au moins une zone mémoire.

7. Dispositif (11) électronique portable pour autoriser une communication avec un dispositif de communication externe (12), ledit dispositif électronique portable (11) comprenant des moyens (22) de communication et des moyens (14, 15) pour présenter une première information visible à l'extérieur, ladite première information étant, au moins en partie, prise en compte par le dispositif électronique portable pour autoriser la communication avec le dispositif (12) de communication externe, ladite première information étant destinée à être lu optiquement par le dispositif de communication externe, le dispositif électronique portable étant apte à effectuer une étape de comparaison (314) par rapport à une seconde information basée au moins en partie sur ladite première information, pour autoriser ladite communication, ladite seconde information étant fournie par le dispositif de communication externe (12) au dispositif électronique portable, **caractérisé en ce qu'**il comprend des moyens (14) de variation faisant varier ladite première information, ladite première information étant une information variable.

8. Dispositif selon la revendication 7, dans lequel le dispositif électronique portable comprend des moyens de déclenchement de la fourniture de l'information variable.

9. Dispositif selon la revendication 8, dans lequel les moyens de déclenchement de la fourniture de l'information variable comprennent des moyens de détection d'une introduction du dispositif électronique portable au sein d'un champ électrique, électromagnétique, lumineux et/ou sonore.

10. Dispositif selon la revendication 9, dans lequel les moyens de déclenchement de la fourniture de l'information variable comprennent au moins une touche activable depuis l'extérieur du dispositif électronique portable.

11. Dispositif selon l'une des revendications 7 à 10, dans lequel le dispositif électronique portable est une carte à puce de type compris au sein de la liste comprenant :
- identification électronique d'un objet et/ou d'une personne ;
- passeport électronique ;
- carte de santé ;
- paiement électronique ;
- titre de transport électronique ; et/ou
- module d'identification d'abonné doté de moyens de communication radiofréquence avec l'extérieur de la carte à puce.
le procédé comportant une étape (38) de lecture optique de l'information par le dispositif de communication externe

12. Système (10) pour autoriser une communication entre un dispositif (11) électronique portable et un dispositif de communication externe (12),
- le dispositif de communication externe (12) étant configuré pour effectuer une lecture optique d'une première information présentée par le dispositif électronique portable et fournir au dispositif électronique portable une seconde information basée au moins en partie sur ladite première information,
- le dispositif électronique portable comprenant des moyens (22) de communication avec l'extérieur et des moyens (14, 15) pour présenter une première information visible à l'extérieur, ladite première information étant, au moins en partie, prise en compte par le dispositif électronique portable pour autoriser la communication avec le dispositif (12) de communication externe, en effectuant une étape de comparaison (314) par rapport à ladite seconde information basée au moins en partie sur ladite première information pour autoriser ladite communication,
**caractérisé en ce que** dispositif électronique portable comprend des moyens (14) de variation faisant varier ladite première information, ladite première information étant une information variable.

## Patentansprüche

1. Verfahren (30) zum Ermöglichen einer Kommunikation zwischen einer tragbaren elektronischen Vorrichtung (11) und einer externen Kommunikationsvorrichtung (12), wobei die tragbare elektronische Vorrichtung Mittel (14, 15) zum Anzeigen einer ersten von außen sichtbaren Information und Kommunikationsmittel (22) umfasst, wobei die Kommunikation zumindest teilweise berücksichtigt wird von der tragbaren elektronischen Vorrichtung, um die Kommunikation mit der externen Kommunikationsvorrichtung (12) zu ermöglichen, wobei das Verfahren einen Schritt (38) der optischen Auslesung der Information durch die externe Kommunikationsvorrichtung umfasst, wobei die externe Kommunikationsvorrichtung (12) für die tragbare elektronische Vorrichtung eine zweite Information bereitstellt, die mindestens teilweise auf der ersten Information basiert, und wobei das tragbare elektronische Gerät einen Vergleichsschritt (314) in Bezug auf die zweite Information durchführt, um die Kommunikation zu ermöglichen, **dadurch gekennzeichnet, dass** das Verfahren einen Änderungsschritt (34) umfasst, in dem sich die erste Information durch die tragbare Vorrichtung ändert, wobei die erste Information eine variable Information ist.

2. Verfahren nach Anspruch 1, **dadurch gekennzeichnet, dass** die variable Information als Reaktion auf einen Empfang von außen durch die tragbare elektronische Vorrichtung von mindestens einer repräsentativen Information über einen Erfolg bei dem Vergleich bezogen auf eine vorherige Ablesung einer variablen Information bereitgestellt wird.

3. Verfahren nach Anspruch 2, wobei die Bereitstellung einer variablen Information einen Empfang von außen durch die tragbare elektronische Vorrichtung von einer Anzahl vorbestimmter Ratifikationen bezogen auf eine vorherige Auslesung einer variablen Information umfasst.

4. Verfahren nach einem der Ansprüche 1 bis 3, bei dem der Schritt der optischen Auslesung den Zugriff auf mindestens einer Anwendung ermöglicht, die durch die tragbare elektronische Vorrichtung unterstützt wird.

5. Verfahren nach Anspruch 4, wobei die Anwendung in der folgenden Liste enthalten ist:
- eine Anwendung zur Identifikation eines Inhabers;
- eine Anwendung zur Authentifizierung eines Gesprächspartners der tragbaren elektronischen Vorrichtung;
- eine Loyalitätsanfrage eines Beförderers;
- eine Zugangskontrollanwendung für einen Bereich mit eingeschränktem Zugang oder einen Transportdienst;
- eine Anwendung zur elektronischen Zahlung; und/oder
- eine Teilnehmeridentifikationsanwendung.

6. Anwendung eines Verfahrens nach einem der Ansprüche 1 bis 5 auf eine Identifikation des Inhabers der tragbaren elektronischen Vorrichtung, in der das Verfahren die folgenden Schritte umfasst:
- optische Auslesung durch eine tragbare elektronische Vorrichtung von variablen Informationen;
- Bestimmung durch die elektronische Auslesevorrichtung eines ersten Authentifizierungswerts nach einem vorbestimmten Algorithmus zur Authentifizierung und von variablen Informationen;
- Empfang durch die tragbare elektronische Vorrichtung von einer Hochfrequenzverbindung von der elektronischen Auslesevorrichtung des ersten Authentifizierungswerts;
- Vergleichen des ersten Authentifizierungswerts durch die tragbare elektronische Vorrichtung mit einem zweiten Authentifizierungswert, wobei der zweite Authentifizierungswert eine Funktion der variablen Information ist;
- im Fall, dass der erste und zweite Authentifizierungswert sich entsprechen, Autorisierung des Zugangs durch die tragbare elektronische Vorrichtung zu dem mindestens einen Speicherbereich.

7. Tragbare elektronische Vorrichtung (11) zum Ermöglichen einer Kommunikation mit einer externen Kommunikationsvorrichtung (12), wobei die tragbare elektronische Vorrichtung (11) Kommunikationsmittel (22) und Mittel (14, 15) zum Anzeigen einer ersten nach außen sichtbaren Kommunikation umfasst, wobei die erste Information zumindest teilweise durch die tragbare elektronische Vorrichtung berücksichtigt wird, um die Kommunikation mit der externen Kommunikationsvorrichtung (12) zu ermöglichen, wobei die erste Information geeignet ist, optisch durch die externe Kommunikationsvorrichtung ausgelesen zu werden, wobei die tragbare elektronische Vorrichtung einen Vergleichsschritt (314) bezogen auf die zweite Information zum Autorisieren der Kommunikation durchführen kann, mindestens teilweise auf der ersten Information basierend, um die Kommunikation zu ermöglichen, wobei die zweite Information durch die externe Kommunikationsvorrichtung (12) für die tragbare elektronische Vorrichtung bereitgestellt wird, **dadurch gekennzeichnet, dass** sie Änderungsmittel (14) umfasst, die eine Änderung der ersten Information zulassen, wobei die erste Information eine variable Information ist.

8. Vorrichtung nach Anspruch 7, in der die tragbare elektronische Vorrichtung Mittel zur Auslösung der Bereitstellung der variablen Information umfasst.

9. Vorrichtung nach Anspruch 8, wobei der die Mittel zur Auslösung der Bereitstellung von variabler Information Mittel zur Erfassung einer Einführung der tragbaren elektronischen Vorrichtung innerhalb eines elektrischen, elektromagnetischen, Licht- oder Schallfeldes umfassen.

10. Vorrichtung nach Anspruch 9, wobei der die Mittel zur Auslösung der Bereitstellung von variabler Information zumindest eine von außerhalb aktivierbare Taste der tragbaren elektronischen Vorrichtung umfassen.

11. Vorrichtung nach einem der Ansprüche 7 bis 10, wobei der die tragbare elektronische Vorrichtung eine Art von Chipkarte ist, die enthalten ist in der Liste, die umfasst:
- elektronische Identifizierung eines Objekts und/oder einer Person;
- elektronischen Reisepass;
- Gesundheitskarte;
- elektronische Zahlung;
- elektronische Fahrkarte; und/oder
- Teilnehmeridentifikationsmodul, ausgestattet mit Mitteln zur Hochfrequenzkommunikation mit dem Äußeren der Chipkarte wobei das Verfahren einen Schritt (38) der optischen Auslesung der Information durch die externe Kommunikationsvorrichtung umfasst.

12. System (10) zum Ermöglichen einer Kommunikation zwischen einer tragbaren elektronischen Vorrichtung (11) und einer externen Kommunikationsvorrichtung (12),
- wobei die externe Kommunikationsvorrichtung (12) dazu ausgestaltet ist, eine optische Auslesung einer ersten Information durchzuführen, die durch die tragbare elektronische Vorrichtung dargeboten wird, und für die tragbare elektronische Vorrichtung eine zweite Information zumindest teilweise auf Grundlage der ersten Information bereitzustellen,
- wobei die tragbare elektronische Vorrichtung externe Kommunikationsmittel (22) und Mittel (14, 15) zum Wiedergeben einer ersten nach außen sichtbaren Information umfasst, wobei die erste Information zumindest teilweise durch die tragbare elektronische Vorrichtung berücksichtigt wird, um die Kommunikation mit der externen Kommunikationsvorrichtung (12) zu ermöglichen, unter Durchführen eines Vergleichsschritts (314) bezogen auf die zweite Information, basierend zumindest teilweise auf der ersten Information, um die Kommunikation zu ermöglichen, **dadurch gekennzeichnet, dass** die tragbare elektronische Vorrichtung Änderungsmittel (14) umfasst, die eine Änderung der ersten Information bewirken, wobei die erste Information eine variable Information ist.

## Claims

1. A method (30) for authorizing a communication between a portable electronic device (11) and an external communication device (12), the portable electronic device including means (14, 15) for presenting a first piece of information visible on the outside and means (22) of communication, the information being at least partly taken into account by the portable electronic device in order to authorize the communication with the external communication device (12), the method comprising a step (38) of optical reading of the information by the external communication device, the external communication device (12) supplying the portable electronic device with a second piece of information based at least partly on said first piece of information and the portable electronic device performing a step of comparison (314) with the second piece of information in order to authorize said communication,
**characterized in that** the method comprises a variation step (34) causing said first piece of information to be varied by the portable device, said first piece of information being a variable piece of information.

2. The method according to claim 1, **characterized in that** the variable information is provided in response to the receipt from outside, by the portable electronic device, of at least one piece of information representative of a success on the comparison relative to a previous reading of a variable piece of information.

3. The method according to claim 2, the supply of a variable piece of information comprises a receipt from outside, by the portable electronic device, of a predetermined number of ratifications relating to a previous reading of a variable piece of information.

4. The method according to one of claims 1 to 3, wherein the optical reading step enables access to at least one application supported by the portable electronic device.

5. The method according to claim 4, wherein the application is included within the following list:
- an application for identifying a holder;
- an application for authenticating an interlocutor of the portable electronic device;
- an application for gaining the loyalty of a holder;
- an application for controlling access to a restricted access zone or to a transport service;
- an electronic payment application; and/or
- a subscriber identification application.

6. An application of a method according to one of claims 1 to 5 for an identification of the holder of the portable electronic device, wherein the method comprises the following steps:
- optical reading, by an electronic reading device, of the variable information;
- determination, by the electronic reading device, of a first authentication value according to a predetermined authentication algorithm and of the variable information;
- receipt by the portable electronic device, via a radiofrequency link from the electronic reading device, of the first authentication value;
- comparison, by the portable electronic device, of the first authentication value to a second authentication value, the second authentication value depending on the variable information;
- if the first and second authentication values match, authorizing access, by the portable electronic device, to said at least one memory zone.

7. A portable electronic device (11) for authorizing a communication with an external communication device (12), said portable electronic device (11) including communication means (22) and means (14, 15) to present a first piece of information visible from outside, said first piece of information being at least partly taken into account by the portable electronic device in order to authorize communication with the external communication device (12), said first piece of information being intended to be read optically by the external communication device, the portable electronic device being capable of performing a comparison step (314) in relation to a second piece of information based at least partly on said first piece of information, in order to authorize said communication, said second piece of information being provided by the external communication device (12) to the portable electronic device,
**characterized in that** it includes variation means (14) that vary said first piece of information, said first piece of information being a variable piece of information.

8. The device according to claim 7, wherein the portable electronic device includes means for triggering the supply of the variable information.

9. The device according to claim 8, wherein the means to trigger the supply of the variable information include means for detecting an introduction of a portable electronic device within an electrical, electromagnetic, light and/or sound field.

10. The device according to claim 9, wherein the means of triggering the supply of the variable information include at least one button that can be activated from the outside of the portable electronic device.

11. The device according to one of claims 7 to 10, wherein the portable electronic device is a smart card of the type included in the list including:
- electronic identification of an object and/or a person;
- electronic passport;
- health card;
- electronic payment;
- electronic travel pass; and/or
- subscriber identification module provided with means of radiofrequency communication with the outside of the smart card,
the method comprising a step (38) of optical reading of the information by the external communication device.

12. A system (10) for authorizing a communication between a portable electronic device (11) and an external communication device (12),
- the external communication device (12) being configured to perform an optical reading of a first piece of information presented by the portable electronic device and to provide the portable electronic device with a second piece of information based at least partly on said first piece of information,
- the portable electronic device including means (22) of communication with the outside and means (14, 15) to present a first piece of information visible on the outside, said first piece of information being at least partly taken into account by the portable electronic device in order to authorize communication with the external communication device (12), by performing a comparison step (314) in relation to said second piece of information based at least partly on said first piece of information in order to authorize said communication,
**characterized in that** the portable electronic device includes variation means (14) that vary said first piece of information, said first piece of information being a variable piece of information.
